# EUROPEAN PATENT APPLICATION

(11) **EP 0 926 462 A2**
(43) Date of publication of application: **30.06.1999**
(21) Application number: 98850203.5
(22) Date of filing: 21.12.1998
(51) Int. Cl.: G01B 5/28, G01B 7/34

(54) **Waviness measurement**

(30) Priority: 22.12.1997 SE 9704864
(71) Applicant: SKF Nova AB, 412 88 Göteborg (SE)
(72) Inventor: Göransson, Bo, 415 06 Göteborg (SE)
(74) Representative: Westman, P. Börje I.

(57) **Abstract**

The present invention relates to a method for measuring waviness of surfaces, in particular waviness on bearing parts, such as balls, rollers and bearing rings using a control element being rotatably applicable against a surface of an object to be checked, whereby a loaded control element (6) having a contact area to the object and having a similar geometry around the contact as the object of the final bearing component is placed in a hydrostatic pocket (5), or kept in a bearing arrangement, allowing it to rotate and move freely; the element (6) is loaded with a substantially constant force; the element (6) is arranged to be moved rotatably across the surface (11) to be tested; at least one transducer (8, 13) is arranged to monitor the direct movement of the element (6) or the movement via the pocket (5); and a signal is created corresponding to the waviness occurred.

The invention further relates to an apparatus for carrying out the method.

## Description

### Technical field

The present invention relates to an apparatus for measuring waviness of surfaces, in particular waviness of bearing parts, such as the rolling elements thereof (balls, rollers and bearing rings) using a controll element being rotably applicable against a surface to be checked.

The object ofthe present invention is to obtain a possibility to measure the waviness of surfaces with higher accuracy than previously possible.

Another object is to obtain a possibility of measuring the waviness on a larger surface than with hitherto used apparatuses and thereby providing a functionality related integration, and in particular to measure the adequate surface when considering a bearing surface involved. Hereby it is possible to measure and integrate the influence of surface structure and surface roughness.

A further object is to obtain bearings of higher quality, where the vibrations of a complete bearing can be predicted.

Yet another object is to obtain a possibility of controlling the process conditions under which the bearing parts are manufactured, as condition variations in the process will be monitored and considered.

### Background of the invention

The poor correlation between waviness and actual vibration measurements of assembled bearings at least for higher frequencies is a great problem, as the vibrations can not always be predicted after a waviness measurement using today's technology. Further, today's measurement technology makes the determinations quite time consuming.

Hitherto, it is only possible to determine amplitude variations in the order of 100 to 10 nanometers in production environment. However, the request today is to find methods and apparatuses for measuring amplitudes of a much smaller size. Such amplitudes might be in the order of or a part of the diameter of an atom or smaller.

The measurement is in particular needed for high precision bearings used in high precision instrument, bearings used in high speed applications, such as house hold equipment, computer hard disc motors and others in order to reduce noise, caused by vibrations at a high frequency. Thus in bearings where the bearing noise can be particularly disturbing as it occurs as a high frequency noise and in noise and vibration sensitive applications the application of the present invention will be of particular interest.

Hitherto a lightly loaded pick-up has been used for measuring of waviness of the different parts of bearings, such as balls, rollers, and rings .The pick-up has been run in one or more narrow pathways on the surface to be tested. Variations of the bearing material, such as inhomogenities, and surface roughness, influences the efficient waviness of the bearing, but is not correctly registered by the pick-up. The pick-up method does not measure all relevant effects which occur in real applications. The surface structure affects the pick-up in quite another way than a higher loaded rolling or rotating body working on a surface.

The difference might be due to the fact that only a fraction of the raceway area is measured; that local variations of the e-module in the subsurface material appear and affects the measurement; and/or that the EHD-film (ElastoHydroDynamic-film) thickness varies due to surface effects.

The rolling of a ball on a ring affects the material down to e.g. a depth of 30 to 40 microns on a small bearing, while a pick-up does not have such an impact on the material. This changes the requisites for a correct measurement of the functional behaviour of a bearing.

A ball on a bearing ring is affected by the whole contact area and thereby by measuring just a fraction thereof is thus not normally representative for the integrated value of the whole area.

It is of importance to measure the surface waviness of a bearing and its parts in order to obtain a tool for quality determination, after assembling such parts, i. a., the vibrations of a bearing can be predicted

It is of further importance to be able to control the process quality and thereby be able to control the process equipment with regard to weariness and other process parameters.

SE-C-3 14 214 relates to a method for testing the rotary movement of balls using a testing roller, in order to check for the quality of the surface layer, the surface or the shape, whereby the roller is brought to act upon a ball with its surface being changeably active due to its shape. This patent does not disclose the measurement of the waviness but larger irregularities or unevenesses on the surface and is in particular to be used in connection with large balls.

### Description of the present invention

It has now been made possible to obtain a method and an apparatus for testing the waviness of surfaces, in particular the surfaces of balls, rollers and rings to be used in assembling bearings, whereby the invention is characterized in that a loaded element having a similar geometry as the object of the final bearing, whereby the element is placed in a hydrostatic pocket, and being loaded with a constant force, is arranged to be moved across the surface to be tested; a transducer monitors the movement of the element via the hydrostatic pocket; and a signal is created corresponding to the waviness occurred.

It is of importance to measure the surface waviness of a bearing in order to obtain a tool for separating bearings into different categories of quality, i. e. vibrations of a bearing can be predicted. By means of the present invention the waviness can be very accurately monitored, and by using a subsequent processing of the signal obtained, the signal related to the testing element, should be possible to be separated from the signal related to the object tested. Hereby the waviness of the object tested can be registered under conditions and geometries very similar to existing conditions in the bearings.

The invention will be disclosed in the following, however, without being restricted thereto, with reference to the accompaying drawing, in which
FIG I shows a schematic view of one embodiment of the present invention;

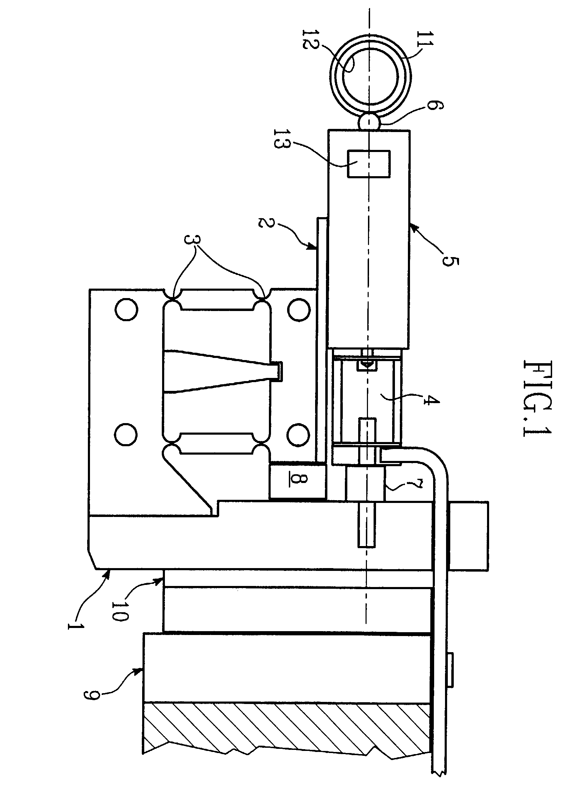

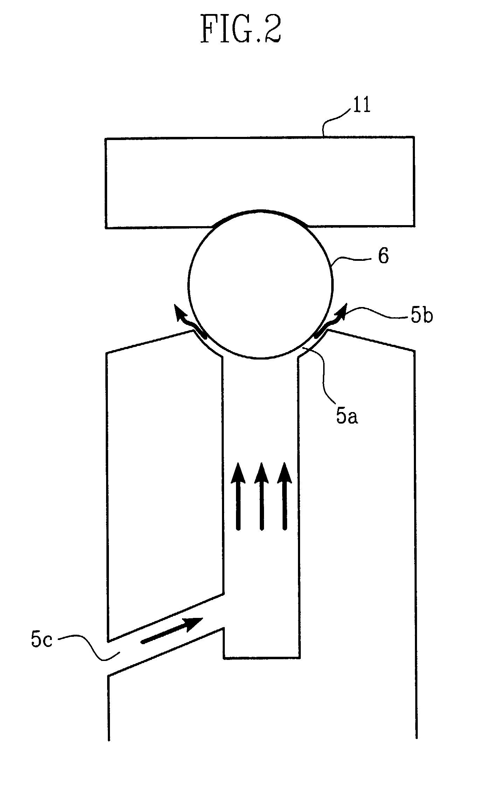

FIG 2 shows a hydrostatic pocket with its element according to the invention; and
FIG. 3 shows a section of a ring wherein the abutment areas of a known pick-up and an element of the invention, respectively, are denoted.

Reference number 1 denotes a body carrying a bridge 2 connected to the body 1 via bending joints 3, which are integral parts of the body 1 and the bridge 2. An air bellow 4 is fixedly provided to the bridge 2, which bellow 4 loads a structure with a hydrostatic pocket 5 into which a rolling or rotating element 6 is arranged. To the end of the air bellow 4 being opposite to the hydrostatic pocket 5 there is a load sensor 7 arranged, which monitors the load force applied onto the hydrostatic pocket 5 via the air bellow 4. The bridge 2 is provided with a capacitive sensor 8, which monitors the movement of the bridge 2 in the bending joints 3. The body 1 is further connected to a fixed plate 9 via bending joint 10, the fixed plate 9 being an integral part of the whole assembly, as well. The bending in the bending joint 10 is further registered via a sensitive sensor 13. Bending joints 3 and 10, and the pocket 5 allow the rolling element 6 to rotate and to move freely in one plane, and thereby the movements thereof in a defined plane preferably a plane including the shaft center of the object tested, can be registered.

The hydrostatic pocket 5 encompasses a ball site 5a, a lubricating fluid outlet 5b, and a lubricating fluid inlet 5c. The fluid inlet receives a restricted pressurized fluid which passes the inlet and flows up to the outlet where it separates the ball from the seat where the ball brings lubricating fluid with it during rotation to lubricate the contact between element and object.

The rolling/rotating element 6, which preferably is made of ceramic material, to ensure a long life, abuts an object 11 to be tested. In the embodiment shown the object to be tested is a ball bearing ring fixedly arranged to a rigid shaft 12. The rolling/rotating element 6 then takes the shape of a bearing ball in order to have a similar geometry as the ball in the ball bearing as assemblied using the ring tested.

The apparatus described operates as follows: A ring 11 to be tested is connected to the rigid shaft 12, whereby the shaft 12 is rotated via an electric or pneumatic motor (not shown) or free running after speeding up. The rolling element 6, the ball, in its hydrostatic pocket is applied to the surface of the ring using a load expressed by the air bellow. When the ring rotates waviness will be transferred via the rolling element to the bridge and is sensed and transduced. Any movements normal to the ring track surfacce, i.e., ring to ball contact, will be transferred via the capacitive sensor 8 as the bridge 2 moves in its longitudinal direction in the bending joint 3. The movements obtained are thus transduced via the sensors to a monitoring equipment, wherein the transduced signal is interpreted and to show the waviness related to the ring object as tested. The determination will reflect the conditions under which a bearing has been produced, as well, and the measurement can thus be used for registering the condition of the process equipment used in manufacturing the bearing part in question, or to predict migration of the assembled bearing.

Sidewise movements of the ball, i.e., perpendicular to the normal direction of the ring-ball contact are sensed and registered via the sensor 13 at the joint 10.

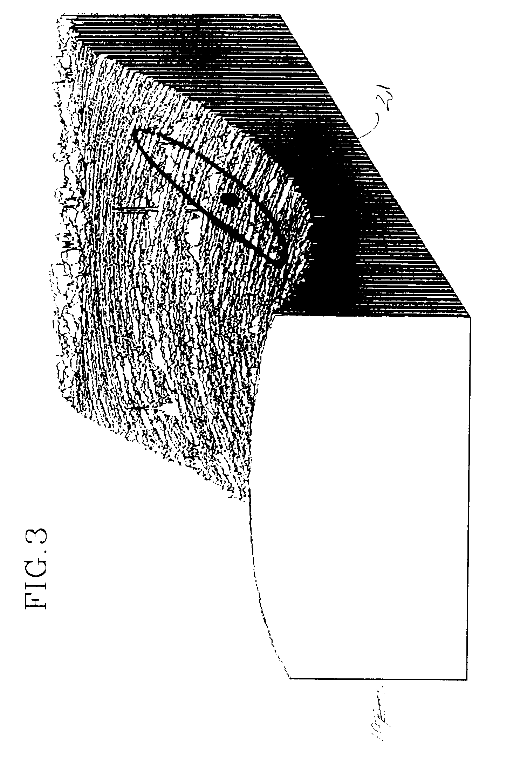

FIG 3 shows an enlargement of a ring surface, wherein the point mark in the centre of the ovale, shows the point area of a pick-up of a known measuring equipment, while the ovale surface shows the contact area of a ball. Below the surface, 21 denotes the volume of the material which is influenced by the ball in duty, i.e., while being placed in a bearing on e.g., a rotating shaft. As evident from that Figure 3, the ball influences, and is influenced by a real area, rather than by a pick-up end. Thus the pick-up end will react more incontrolable upon reaching an unevenness on the surface than will the ball do. Thus the ball will show the unevenness occurring under practical conditions rather than in a mere testing. Furthermore, the ball can be loaded with such a force as to mimic a true situation, which the pick-up can not.

In case balls or rollers shall be tested these will be placed between ceramic plates or rings under pressuring load, of which plates or rings one is placed in or connected to the hydrostatic pocket or bearing to provide a rigid low friction support, whereupon the motion of the plate/ring is monitored when rotating the ball or roller. Thus a measurement can take place using the ring as well.

## Claims

1. A method for measuring waviness of surfaces, in particular waviness on bearing parts, such as balls, rollers and bearing rings using a control element being rotatably applicable against a surface of an object to be checked, **characterized** in that
a loaded control element (6) having a contact area to the object and having a similar geometry around the contact as the object of the final bearing component is placed in a hydrostatic pocket (5), or kept in a bearing arrangement, allowing it to rotate and move freely;
the element (6) is loaded with a substantially constant force;
the element (6) is arranged to be moved rotatably across the surface (11) to be tested;
at least one transducer (8, 13) is arranged to monitor the direct movement of the element (6) or the movement via the pocket (5); and
a signal is created corresponding to the waviness occurred.

2. A method according to claim 1, **characterized** in that
the control element (6) is so loaded that it obtains a loading area which is representative to the practical conditions.

3. A method according to claim 1, **characterized** in that
the movements of the object tested and related to the contact area are of the same order as of the object (11) when used and being in a real application, and whereby the movements in the load direction are monitored via a motion sensor (8), and perpendicular movements are monitored via a further motion sensor (13).

4. A method according to one or more of the preceding claims **characterized** in that the control element (6) is made of a ceramic material.

5. A method according to claim 1, **characterized** in that the control element (6) has the form of a ball of a ball bearing.

6. A method according to claim 1, **characterized** in that the control element (6) has the form of a roller of a roller bearing.

7. A method according to claim 1, **characterized** in that the control element (6) has the form of a flat surface to indicate the ring of a ball and/or roller bearing.

8. A method according to claim 1, **characterized** in that the control element (6) has the form of a ring of a ball or roller bearing, whereby a ball is clamped between loaded surfaces, and is rotated between two or more control element.

9. Apparatus for measuring the waviness of a surface, in particular waviness on bearings, such as balls, rollers and bearing rings using a rolling element being rotatably applicable against a surface to be checked, **characterized** in a loaded element (6) having a similar geometry as the object of the final bearing, a hydrostatic pocket (5) or a bearing arrangement allowing free rotation of the loaded element (6) and carrying said element, means for loading the element (6) with a constant load force; means for rotating an object to be tested; at least one transducer (8, 13) to monitor the movement of the element (6) via the hydrostatic pocket (5) or said arrangement; and means for creating a signal corresponding to the waviness occurred.
